# EUROPEAN PATENT APPLICATION

(11) **EP 4 826 482 A1**
(43) Date of publication of application: **21.10.2026**
(21) Application number: 25222281.5
(22) Date of filing: 10.12.2025
(51) Int. Cl.: G05D 1/622, G05D 1/695, G05D 1/698

(54) **METHOD, SYSTEM, AND ROBOTIC WORK TOOL FOR LAWN MAINTENANCE**

(30) Priority: 17.04.2025 SE 2550375
(71) Applicant: Husqvarna AB, 561 82 Huskvarna (SE)
(72) Inventor: Madunic, Sebastian, 561 82 Huskvarna (SE); Mattsson, Olof, 561 82 Huskvarna (SE); Axell, Philip, 561 82 Huskvarna (SE); Cronholm, Carl Samuel Henric Rantzien, 561 82 Huskvarna (SE); Hellsin, Beppe, 561 82 Huskvarna (SE); Alexiusson, Mikael, 561 82 Huskvarna (SE)

(57) **Abstract**

A method of providing lawn maintenance in a work area (1), comprises using first (3a, 3b, 3c, 3d) and second (5a, 5b, 5c, 5d) robotic work tools. Their positions are transmitted to a control node, which determines their driving paths and driving speeds. The respective paths define a sub-area swept by a straight line (12a, 12b, 12c, 12d) between the robotic work tools (3a, 3b, 3c, 3d, 5a, 5b, 5c, 5d) when they are progressing along their driving paths.

A lawn maintenance system for operating in a work area (1) comprises the robotic work tools (3a, 3b, 3c, 3d, 5a, 5b, 5c, 5d), and a control node. The robotic work tools (3a, 3b, 3c, 3d, 5a, 5b, 5c, 5d) comprise navigation units and communication units. The control node comprises characteristics of the work area (1) and calculates the driving paths and driving speeds of the robotic work tools (3a, 3b, 3c, 3d, 5a, 5b, 5c, 5d) based also on the area between them. The robotic work tools (3a, 3b, 3c, 3d, 5a, 5b, 5c, 5d) are interconnectable by a line device (8a, 8b, 8c, 8d), and the robotic work tools (3a, 3b, 3c, 3d, 5a, 5b, 5c, 5d) comprise at least one line device (8a, 8b, 8c, 8d) attachment.

## Description

### Field of the invention

The present invention relates to a method of providing lawn maintenance in a work area, the method comprising using a first and a second robotic work tool, each robotic work tool detecting its position in the work area.

The invention also relates to a lawn maintenance system for operating in a work area in accordance with the method, the system comprising at least two robotic work tools, and a control node, the robotic work tools each comprising communication units configured to transmit and receive information about the respective positions and motions of the robotic work tools to the control node, which is configured to receive the information of the positions and motions and of characteristics of the work area, and configured to calculate the driving paths and driving speeds of the robotic work tools and transmit instructions to each of the robotic work tools.

The invention relates further to robotic work tool for use in a lawn maintenance system, the work tool comprising a navigation unit, and a communication unit for transmission of position and motion information to a control node.

### Background

EP4390595A1 discloses a work robot system, wherein a number of robots perform work in the same work area. The driving paths of the robots are calculated such that the robots do not collide with one another. Also, the charging of the work robots must take place in a planned manner, avoiding undue down-time, since one single charging point may be used by all the work robots. Further, the work schedule of the robots has to be calculated such that the work performed by one robot is considered by the other robot or robots in the work area, assuring that no parts of the work area are left untreated by mistake, and that tasks are performed in a suitable order. Hereby the risk that one robot may undo work previously performed by another robot is eliminated. Also, the risk that a second robot tries to perform its task in an area where a first robot has not yet performed a task, which should precede the task of the second robot, is eliminated.

The disclosure does not mention two or more robots working in cooperation, simultaneously, on one single task which cannot be performed by only one robot. Also, the work area, wherein any task is to be performed, is completely covered by the driving paths of the robots, which calls for long total driving paths.

### Summary

It is an object of the present invention to solve, or at least mitigate, parts or all of the above-mentioned problems. To this end, there is provided a method which comprises transmitting the position of at least the first or the second robotic work tool to a control node; the control node, determining a driving path and a driving speed, for each of the first and second robotic work tools; the driving speed for each robotic work tool being calculated as a function of the position of both robotic work tools in their respective paths; the driving paths defining a sub-area in the work area that is swept by a straight line between the first and the second robotic work tool when progressing along the driving paths at their respective driving speeds; providing the respective determined driving paths and driving speeds to the first and the second robotic work tools, and driving along the respective driving paths with the first and the second robotic work tools at the determined driving speeds.

Hereby the lawn maintenance system may be useful for performing tasks which involve two or more robotic work tools moving together in the work area in a coordinated manner. In a particular embodiment, the task to be performed may involve two robotic work tools moving together across the work area, dragging a line device between them, thereby sweeping the ground between them, in particular a lawn, and thereby removing dew, sand and/or small debris.

In an embodiment of the method, the determined drive paths for the robotic work tools and the straight line between them are determined to extend on one single side of an obstacle.

Hereby a situation wherein a line device, arranged between two robotic work tools, is caught on an obstacle is avoided.

In further embodiments of the method, instructions transmitted to the robotic work tools comprise instructions to feed or retract a line device attached to two of the robotic work tools, the feed or retraction being calculated as a function of the distance between the work tools during the progression along the driving paths.

Hereby the control node calculates not only the driving paths of the robotic work tools, but also the needed length of a line device between them as a function of the current distance between them. The line device is attached to each one of two work tools in a respective attachment point. In order to provide a lengthening or shortening of the line device, at least one of the attachment points may be configured as a reel, preferably with a latch or a lock. The line device needs to be longer than the distance between the robotic work tools in order to be long enough to be dragged along the ground, thereby sweeping the lawn.

However, when the robotic work tools are in a transport mode, e. g. when they are in transfer from one part of the workplace to be swept to another part, they may travel very close to one another, and possibly in a single file. In such instances, it may be unnecessary, or even undesirable, that the line device is dragging on the ground. Instead, these instances may require that the line device is very short, e. g. approximately equal to the distance between the robotic work tools, for an optimal performance of the lawn maintenance system, and for avoiding that the line device gets snagged or caught up in the work area, or even that it is run over and damaged by one of the robotic work tools. A similar situation may occur when the robotic work tools make a sharp curve, and the line device may have to be temporarily retracted in a similar manner.

In even further embodiments of the method, the planned paths, for which instructions are issued to the robotic work tools, are calculated such that they do not cross one another.

Hereby, if a line device is attached to the robotic work tools, the risk that the line device is twisted, snagged, or run over by one of the work tools is reduced. However, an exception may be situations wherein the line device is so short that it does not touch the ground, i. e. when the work tools are in a transport mode during transfer between work areas.

In still further embodiments of the method, each work tool intermittently transmits reports of the positions and motions of detected obstacles, including permanent obstacles, temporary obstacles, and other work tools in the area to the control node.

Hereby the travel paths of each of the robotic work tools may be planned with consideration of any obstacles that may be detected by the robotic work tools while they are present in the work area, regardless of whether they are permanent or temporary, stationary, or moving. The reports may be transmitted to the other robotic work tool or tools or to an external physical or virtual control node designed for information exchange.

In yet further embodiments of the method, the work tools are instructed to avoid areas designated as greens on a golf course.

Hereby the greens, which are sensitive areas, may be avoided from damages that may result from a line device being dragged behind the robotic work tools. Also, due to the short length of the grass on the greens, the need for removing dew therefrom may be less than in other areas of a golf course. However, there may be cases, in particular if the length and texture of the line device is selected carefully, if the driving speeds are limited, and if the driving paths of the robotic work tools are planned to extend in areas that are not sensitive to wear from the wheels of the robotic work tools, where removal of dew, small twigs, leaves, or worm casts may be performed also on greens.

In a second aspect of the invention, parts or all of the above-mentioned problems are solved, or at least mitigated, by a lawn maintenance system wherein the robotic work tools are interconnectable by a line device and the control node is configured to base its calculations of the driving paths and driving speeds also on the area between the work tools.

Hereby the control node, being provided with the information of the current positions, speeds and directions of motion of the work tools, as well as the boundaries of the work area, may be able to calculate and coordinate the movements of the work tools, such that a task may be performed by the work tools in cooperation with one another, i. e. the removal of dew by dragging a line device along the ground between them.

In an embodiment of the system, the control node is set up at least partly in at least one of the robotic work tools.

Hereby, if the control node is set up solely in one robotic work tool, there is no need for an external unit, be it physical or virtual. Also, the control node may be provided in either one of the work tools or two or more of them. If it is provided in a single unit, the work tools may be configured to act according to a master and slave principle. Hereby the navigation of the robots may be particularly advantageous to implement in a reliable way. The basis for the navigation of the master tool is already present in a robotic work tool, which is able to navigate in a work area with virtual boundaries. The slave tool, or tools, may be configured to follow the master tool at a suitable distance, which may be determined by the external conditions, while, at the same time, it does not cross the outer boundaries of the work area nor collide with any permanent or temporary obstacles.

In further embodiments of the system, the control node is at least partly set up in an external unit.

Hereby, essential parts of the control node may be placed outside of the robotic work tools, either as a physical unit or integrated in an existing navigation entity, which may comprise software. In an advantageous embodiment, the control node is cloud-based.

In even further embodiments of the system, the line device is flexible, such as a rope, tube, cable, etc. and is attached between at least two of the work tools.

Hereby dew removal from a lawn may be performed efficiently by two coordinated work tools by dragging the line device between two work tools. The work tools move around in the work area at a similar pace, thereby letting the flexible line device sweep the lawn until all, or as much as possible, of the work area has been swept and dew has been removed therefrom.

The flexibility and weight of the line device may be considered when selecting a suitable line device for the removal of dew and possibly other elements from the lawn. The line device should be heavy enough to bend the blades of grass, as the line device is dragged over them, but not so heavy that they are bent down for any longer time period. After bending, they may be able to flex back into an upright position. Hereby most dew drops are shaken off. The flexibility of the line device may allow it to be rolled up and to be fed out as needed.

The driving paths and driving speeds of the robotic work tools are calculated by the control node in such a manner that their driving paths take account not only of obstacles and work area boundaries in front of them, but also of obstacles and boundaries in the area between them, i. e. in the planned path of the line device between them such that the flexible line device does not get caught on an obstacle. The calculation of the driving paths and driving speeds of the robotic work tools should be designed to ensure that as much of the work area as practically possible is swept by the line device.

In some embodiments of the system, the flexible line device is configured to be arranged with a length longer, by a predetermined amount, than the current distance between the work tools, such that a slack is obtainable, for dragging behind the work tools when they are moving.

Hereby a sufficient contact between the lawn and the line device may be obtained. If the length of the line device is too short, i. e. only equal to the distance between the robotic work tools, the line device would be tense and arranged at a distance above the ground. If the line device, on the other hand is excessively long, it may get snagged on the ground, or it may become twisted into a narrow kink, which sweeps only a narrow area behind the robotic work tools.

In further embodiments of the system, at least one of the robotic work tools is provided with a reel for attachment of one end of the line device, and the reel is configured to control the slack of the flexible line device between the robotic work tools.

Hereby the flexible line device may be fed out or retracted in a suitable amount, as a function of the distance between the robotic work tools, determined by the control node. The distance between the two work tools may be varied as necessary in consideration of the boundaries and other characteristics of the work area, while the flexible line device obtains an adequate amount of slack to sweep the lawn efficiently.

In still further embodiments of the system, the length of the flexible line device is determined as a function of a pulling force in the line device.

Hereby, when an amount of the flexible line device is sweeping the lawn between/behind the robotic work tools, there may be a resistance force, caused by the weight of the line device and the contact between the line device and the ground, resulting in a pulling force in the line device. When the pulling force reaches a predetermined amount, no further length of the line device may be fed out. The feeding of the line device may be controlled by the control node. The feeding may alternatively be controlled by mechanical means including ratchets, locks, latches, springs etc.

In a third aspect of the invention, parts, or all, of the above-mentioned problems are solved, or at least mitigated, by a robotic work tool wherein at least one line device attachment is provided on the work tool.

Hereby the robotic work tool may be useful for attaching a line device, which is to be dragged behind two robotic work tools. The other end of the line device may hence be attached to a similar robotic work tool, and the two robotic work tools work in cooperation with one another dragging the line device between them, such that dew, sand, and/or small debris, such as leaves, may be collected or removed from the lawn in the work area.

In an embodiment of the third aspect, the robotic work tool comprises at least a part of the control node.

Hereby the calculating unit may be configured as simple as possible, in some embodiments without external physical devices. This means that two or more robotic work tools may be configured to work together in a coordinated manner, in some embodiments in communication with "the cloud".

In further embodiments of the robotic work tool, the line device attachment comprises a reel configured to control the feeding and the retraction of the line device.

Hereby the amount of slack in the line device may be carefully regulated depending on both the task and the distance between the robotic work tools.

In even further embodiments of the robotic work tool, the navigation unit is configured to detect obstacles in the work area and to transmit information thereof to the control node.

Hereby obstacles that are not integrated into a map of the work area in the control node may be detected as the robotic work tool is moving around in the work area.

In still further embodiments of the robotic work tool, the robotic work tool comprises a drive system which is configured to steer away from the line device to compensate for any pulling force from the line device.

Hereby, if the robotic work tools are subjected to any pulling force from the line device that is dragged behind/between them, the steering of the work tools may be optimized, and they may follow their respective planned travel paths with high precision.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
- Fig. 1: is a schematic illustration of a work area with exemplary positions of robotic work tools working in accordance with the disclosed method and system; and
- Fig. 2: is a side view of an example of a robotic work tool that may be used in the disclosed method and system.

All the figures are schematic, not necessarily to scale, and generally only show parts which are necessary in order to elucidate the embodiments, wherein other parts may be omitted.

### Detailed description of the exemplary embodiments

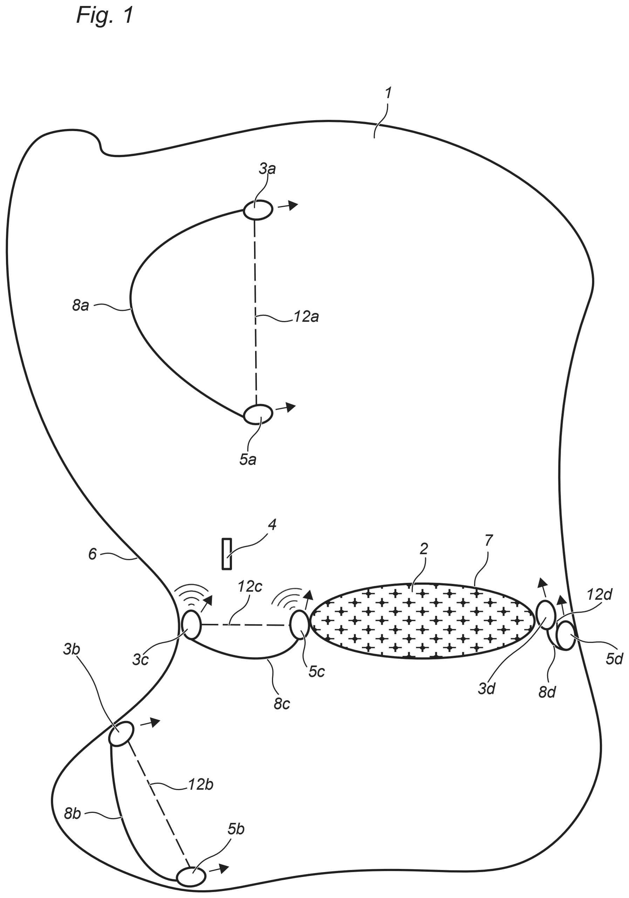

Fig. 1 illustrates an example of a work area 1, wherein the disclosed system and method of lawn maintenance may be put to practical use. The work area 1 comprises a restricted area 2, which is not intended to be accessed by any robotic work tools. The restricted area 2 may, for instance, comprise water, sand, bushes, etc.

The boundaries 6 of the work area 1 and the boundaries 7 of the restricted area 2 may be defined by any means known in the art, such as physical boundaries, electric wires emitting electromagnetic fields, or satellite-based navigation, etc. Robotic work tools 3a, 3b, 3c, 3d, 5a, 5b, 5c, 5d moving in the work area 1 are configured to take account of the boundaries 6, 7 and not cross over them.

The work area 1 may also include temporary obstacles 4, such as balls, branches, animals, and the system and method of lawn maintenance, as well as the robotic work tools 3a, 3b, 3c, 3d, 5a, 5b, 5c, 5d included therein, need to be configured to take account of such obstacles by any method known in the art, e. g. methods comprising one or more of reflected light, light sensors, cameras, image interpretation, ultrasound, collision sensors, lidar, etc.

A number of robotic work tools 3a, 3b, 3c, 3d, 5a, 5b, 5c, 5d are shown in Fig. 1 in various possible work positions. Typically, there may not be more than one pair of robotic work tools 3a, 3b, 3c, 3d, 5a, 5b, 5c, 5d working in one single area. However, it is indeed possible to let more than one pair of robotic work tools 3a, 3b, 3c, 3d, 5a, 5b, 5c, 5d operate simultaneously in the same work area 1, as shown in Fig. 1.

Looking first at the robotic work tools 3a, 5a, it may be seen that they are moving forward in virtually the same direction across the work area 1. The robotic work tools 3a, 5a are interconnected by a line device 8a, which is dragged along the ground behind them. The line device 8a may temporarily contact the blades of grass in the lawn and bend them. As the line device 8a is dragged forward, it will lose contact with the respective blades of grass, which may then resume their upright positions. Due to the motions of the blades of grass bending back and forth, any dew or drops of water on the blades of grass may be shaken off or possibly scraped off by the line device 8a. The same procedure is useful for shaking grains of sand from the blades of grass, and letting the sand fall to the ground. If sand has been deposited on parts of the lawn as a maintenance measure, it is desirable that as much sand as possible is removed from the blades of grass before the mowing of the lawn. Otherwise, the sand would have an unnecessary detrimental effect on the cutting blades of the mower.

The line device 8a is longer than the shortest distance between the two robotic work tools 3a, 5a, such that the line device 8a may be relaxed, and long enough to touch the ground over a large part of its extent, preferably over most of its extent, and even more preferably over three quarters of its extent. At the same time, it should be noted that a prerequisite for contact between the line device 8a and the ground is that the distance between the robotic work tools 3a and 5a and the length of the line device 8a are selected relative to one another, such that the line device may form an approximately horizontal arcuate shape behind the robotic work tools.

If the line device 8a is too long, relative to the distance between the robotic work tools 3a, 5a, there is a risk that the middle part of the line device 8a may get twisted or kinked, which in turn may reduce the extent of contact with the lawn. Hereby the line device may be less efficient than intended for the removal of dew etc. from the lawn. Also, a twist or kink may easily get snagged on the ground, possibly causing damages to the lawn, or unwanted stops of the robotic work tools 3a, 5a.

If the line is too short relative to the distance between the work tools, a consequence may be that only a very short section of the line device 8a touches the ground, and any attempts of sweeping of the lawn may be inefficient, since only a narrow path behind the robotic work tools 3a, 5a may be swept.

In order to regulate the length of the line device 8a for various situations and circumstances, the robotic work tools 3a, 5a may be provided with at least one reel, to which at least one of the ends of the line device 8a may be attached. In some embodiments, any such reel may be provided with a mechanism for feeding and retracting the line device 8a.

The mechanism may be entirely, or at least partly, mechanical, and may comprise springs, ratches, locks, latches, etc. The mechanism may be configured to be released, retracted, or locked in dependence of the force resulting from the mass if the free line device 8a, dragged behind the robotic work tools 3a, 5a, and the friction between the line device 8a and the ground. Also, the angle between the travel direction of each robotic work tool 3a, 5a and a respective part of the line device 8a extending from the reel thereon may influence the release, retraction, or locking of the line device 8a.

If the resisting force is too low and/or the angle to the travel direction is too high, more of the line device 8a may be released, since the conditions indicate that not enough of the line device 8a is dragged along the ground, and/or that the length is insufficient relative to the distance between the robotic work tools 3a, 5a. In many embodiments the release is not an active feed, but rather that the friction from the ground may pull the line device 8a from the reel.

If, on the other hand, the resistance becomes too high, and the angle is too low, the line device 8a may have to be actively retracted, since these conditions may indicate that the line device 8a is too long for an efficient sweeping of the lawn, i. e. a too narrow path, or that the line device is stuck on the ground.

The case where the angle is minimal typically indicates that the line device 8a is in a kink and no efficient sweeping takes place, even if the resistance force is low. In this case the line device 8a should be retracted, until the angle is again in the acceptable interval.

When the resistance force and the angle are within their respective predetermined intervals, this is an indication that the free amount of the line device 8a is suitable relative to the distance between the robotic work tools 3a, 5a, and the reel is temporarily locked, to maintain an efficient sweeping action.

The resistance force caused by the weight of the line device 8a and its friction may typically affect the steering of the robotic work tools 3a, 5a, since the line device 8a exerts a pulling force which has a side component, due to the angle of the line device 8a relative to the direction of travel of the robotic work tools 3a, 5a. Hence the robotic work tools 3a, 5a need to be configured to compensate appropriately for the dragging force caused by the line device 8a during steering. Typically, the drive wheels of the robotic work tools 3a, 5a may be slipping to a higher extent than in regular use of the robotic work tools, where there is no force from dragging the line device 8a.

The robotic work tools 3a, 5a are guided within the work area 1 such that they take account of outer boundaries 6 and of the boundaries of any restricted area 7 within the work area 1. Their travel paths and travel speeds are calculated by a control node, which has information of the work area 1 and its boundaries 6, 7, the number of robotic work tools 3a, 5a in the work area 1 and their respective positions, such that they may receive instructions of their respective planned driving paths and driving speeds.

The robotic work tools 3a, 3b, 3c, 3d, 5a, 5b, 5c, 5d must not collide with one another, but the driving paths are also planned such that they may perform a task simultaneously, in cooperation with one another, i. e. dragging the line device 8a, 8b, 8c, 8d between them, in such an organized manner that virtually the whole work area 1 may be swept by the line device 8a, 8b, 8c, 8d. In order to achieve this, the two robotic work tools 3a, 3b, 3c, 3d, 5a, 5b, 5c, 5d need to be guided such that account is also taken of the area between them.

Mathematically speaking, the travel path needs to take account not only of the width of the robotic work tools 3a, 3b, 3c, 3d, 5a, 5b, 5c, 5d, but also of a imaginary, straight line 12a, 12b, 12c, 12d extending between them, said imaginary line 12a, 12b, 12c, 12d sweeping the work area 1 as the robotic work tools 3a, 3b, 3c, 3d, 5a, 5b, 5c, 5d move side by side therein. The imaginary line 12a, 12b, 12c, 12d should not traverse any boundaries 6, 7 nor any permanent or temporary obstacles, since it represents the line device 8a, 8b, 8c, 8d, which would get stuck on any obstacles. In other words, two robotic work tools 3a, 3b, 3c, 3d, 5a, 5b, 5c, 5d must not pass on different sides of an obstacle or a restricted area; they must travel on the same side. However, the algorithm calculating the travel path may be configured to calculate a travel path where both sides of an obstacle are traversed in sequence during the course of work, such that virtually all of the work area 1 is swept.

Another aspect of the planning of the travel paths of the robotic work tools 3a, 3b, 3c, 3d, 5a, 5b, 5c, 5d is that the robotic work tools 3a, 3b, 3c, 3d, 5a, 5b, 5c, 5d must not cross the travel paths of one another. Otherwise, the line device 8a, 8b, 8c, 8d might be damaged, kinked, or possibly both.

During the planning of the travel paths of the robotic work tools 3a, 3b, 3c, 3d, 5a, 5b, 5c, 5d, the line device 8a, 8b, 8c, 8d needs to be kept short during sharp turns of the robotic work tools 3a, 3b, 3c, 3d, 5a, 5b, 5c, 5d, such that it is not accidentally run over by one of the robotic work tools 3a, 3b, 3c, 3d, 5a, 5b, 5c, 5d.

Focusing now on the robotic work tools 3b, 5b, which each travels close to the outer boundary 6 of the work area 1, it may be seen that the line device 8b is only slightly longer that the shortest distance between the robotic work tools 3b, 5b. Typically more of the line device 8b may be fed out, provided that there is an excess amount of the line device 8b to be fed from a reel on at least one of the robotic work tools 3b, 5b. When the whole amount of the line device 8b extends between the robotic work tools 3b, 5b, it is not possible to feed out a further amount of the line device 8b, as described above. Hence the distance between the robotic work tools 3b, 5b, and hence their respective travel paths and travel speeds, need to be planned and adjusted to obtain a suitable slack of the line device 8b for an optimal sweeping of the lawn. Virtually all of the lawn should be traversed, but the travel paths of the robotic work tools 3b, 5b, should not be unnecessarily long and time-consuming.

Turning now to the exemplary robotic work tools 3c and 5c passing between the outer boundary 6 of the work area 1, we see an illustration of detection of a temporary obstacle 4, of which there is no previous information in the calculation node. Nor are there any boundaries around this obstacle 4. The detection of such temporary obstacles 4 may be performed by any means known in the art, such as IR light, visible light, image detection, ultrasound, mechanical or electric collision sensors, etc. On detection of the obstacle 4, its position, size, and any similar useful information is transmitted to the control node for use in any future calculations of the travel paths and travel speeds of the robotic work tools 3a, 3b, 3c, 3d, 5a, 5b, 5c, 5d. If the obstacle 4 is detected at a distance therefrom, i. e. before there is physical contact with the obstacle 4, the travel path of one or both of the robotic work tools 3c, 5c may be adapted such that neither of the robotic work tools 3c, 5c collides with the obstacle, and such that they both pass the obstacle 4 on the same side thereof. Hereby the risk that the line device 8c is caught on the obstacle 4 is eliminated.

In some embodiments, the sensors that are able to detect temporary obstacles are able to monitor part, or all, of the area between the travel paths, i. e. the area which is swept by the line device 8c. If more than one sensor, or type of sensor, are arranged on the robotic work tools 3c, 5c, they may cooperate such that the whole area is monitored by at least one sensor at each point in time.

The work tools 3d, 5d are passing though a narrow passage between the restricted area 2 with its boundary 7 and the outer boundary 6 of the work area 1. To ensure that the line device 8d is not tangled nor run over by one of the robotic work tools 3d, 5d, it is kept very short whenever the imaginary line 12d is short. However, when the robotic work tools pass through such narrow passages of lawn, the robotic work tools 3d, 5d themselves may provide the desired sweeping effect. This "transport mode" may also be utilized by work tools 3d, 5d when they are traveling from one work area 1 to another, i. e. during a passage where no sweeping effect is needed nor desired.

All calculations needed to guide the robotic work tools 3a, 3b, 3c, 3d, 5a, 5b, 5c, 5d with the line device 8a, 8b, 8c, 8d may be performed in a control node (not illustrated). The control node may in some embodiments be positioned at least partly in one of the robotic work tools 3a, 3b, 3c, 3d, 5a, 5b, 5c, 5d in a cooperating pair of work tools. In such embodiments, the pair of cooperating robotic work tools 3a, 3b, 3c, 3d, 5a, 5b, 5c, 5d may perform in a master and slave manner, wherein the "master" work tool directs the "slave" work tool, which follows suit as instructed. In some embodiments the calculations for the navigations in the work area 1 are performed in a control node which is at least partly located outside of the robotic work tools 3a, 3b, 3c, 3d, 5a, 5b, 5c, 5d, e. g. in a separate physical unit or in the "cloud". All communication between the robotic work tools 3a, 3b, 3c, 3d, 5a, 5b, 5c, 5d and the control node may be performed wirelessly.

The control node, regardless of its location, may perform the calculations of the travel paths and speeds of the robotic work tools, always with consideration of the imagined line 12a, 12b, 12c, 12d extending the shortest distance between them. This imagined line 12a, 12b, 12c, 12d serves as a representative of the physical line device 8a, 8b, 8c, 8d, although the latter is longer and is dragged behind the robotic work tools 3a, 3b, 3c, 3d, 5a, 5b, 5c, 5d along the ground with an arcuate shape. If the imagined line 12a, 12b, 12c, 12d does not cross the boundaries 6, 7 of the work area 1 and the restricted areas 2, as the robotic work tools 3a, 3b, 3c, 3d, 5a, 5b, 5c, 5d move around in the work area 1, the physical line device 8a, 8b, 8c, 8d, will not do so either, provided that its length is adjusted properly, as described above.

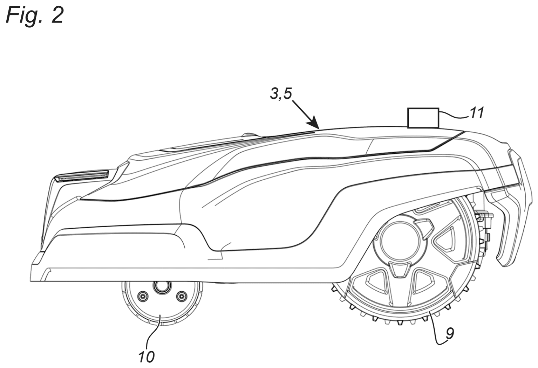

Fig. 2 shows a robotic work tool 3, 5 which may be used in the system according to Fig. 1. The robotic work tool 3, 5 may be a tool for yard work, e. g. a lawn mower. The robotic work tool 3, 5 has at least two drive wheels 9, which are typically placed in the rear of the robotic work tool 3, 5. At the front, there is at least one front wheel 10, which may be free rolling, in some embodiments a castor wheel or wheels.

An attachment 11 is arranged on the robotic work tool 3, 5. In Fig. 2 the attachment 11 is positioned on top of the robotic work tool 3, 5, but, in some embodiments, it may be arranged at the back of the robotic work tool 3, 5. The details of the attachment 11, such as reels, springs, etc. may be greatly varied in different embodiments, and they are hence not disclosed in the drawings. In some embodiments the feed, locking, and retraction of the line device 8 is at least partly controlled from the control node, which calculates the appropriate amount of the fed out line device 8 at each moment, based on the positions of the robotic work tools 3, 5, the distance and area between them, as well as the work area 1 with any obstacles 4, restricted areas 2 and boundaries 6, 7. The feed, locking, and retraction may then be performed by sending signals to a suitable electrical means, such as a small electric motor, etc.

The drive wheels 9 are utilized for steering the robotic work tool 3, 5, by varying the respective speed and sometimes the direction of rotation, of one wheel 9 relative to the other. During the steering of the robotic work tool 3, 5, the drive wheels 9 may be slipping on the ground. For example, to allow the robotic work tool 3, 5 to turn, one of the drive wheels 9 may be rotating in a forward direction, while the other one slips on the ground, either since it does not rotate at all, or since it rotates in a backwards direction.

Since the line device 8 may exert a dragging force with a lateral component on the robotic work tool 3, 5, the control node may instruct the drive wheels 9 to compensate for any deviation from the planned path of travel, that may be caused by the dragging force from the line device 8.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. A method of providing lawn maintenance in a work area (1), the method comprising using a first (3a, 3b, 3c, 3d) and a second (5a, 5b, 5c, 5d) robotic work tool, each robotic work tool (3a, 3b, 3c, 3d, 5a, 5b, 5c, 5d) detecting its position in the work area (1),
**characterized by**
- transmitting the position of at least the first or the second robotic work tool (3a, 3b, 3c, 3d, 5a, 5b, 5c, 5d) to a control node;
- the control node, determining a driving path and a driving speed, for each of the first and second robotic work tools (3a, 3b, 3c, 3d, 5a, 5b, 5c, 5d);
- the driving speed for each robotic work tool (3a, 3b, 3c, 3d, 5a, 5b, 5c, 5d) being calculated as a function of the position of both robotic work tools (3a, 3b, 3c, 3d, 5a, 5b, 5c, 5d) in their respective paths;
- the driving paths defining a sub-area in the work area (1) that is swept by a straight line (12a, 12b, 12c, 12d) between the first and the second robotic work tool (3a, 3b, 3c, 3d, 5a, 5b, 5c, 5d) when progressing along the driving paths at their respective driving speeds;
- providing the respective determined driving paths and driving speeds to the first and the second robotic work tools (3a, 3b, 3c, 3d, 5a, 5b, 5c, 5d), and
- driving along the respective driving paths with the first and the second robotic work tools (3a, 3b, 3c, 3d, 5a, 5b, 5c, 5d) at the determined driving speeds.

2. The method according to claim 1, **wherein** the determined drive paths for the robotic work tools (3a, 3b, 3c, 3d, 5a, 5b, 5c, 5d) and the straight line (12a, 12b, 12c, 12d) between them are determined to extend on one single side of an obstacle (4).

3. The method according to claim 1 or claim 2, **wherein** instructions transmitted to the robotic work tools (3a, 3b, 3c, 3d, 5a, 5b, 5c, 5d) comprise instructions to feed or retract a line device (8a, 8b, 8c, 8d) attached to two of the robotic work tools (3a, 3b, 3c, 3d, 5a, 5b, 5c, 5d), the feed or retraction being calculated as a function of the distance between the work tools (3a, 3b, 3c, 3d, 5a, 5b, 5c, 5d) during the progression along the driving paths.

4. The method according to any of claims 1 to 3, **wherein** the planned paths, for which instructions are issued to the robotic work tools (3a, 3b, 3c, 3d, 5a, 5b, 5c, 5d), are calculated such that they do not cross one another.

5. The method according to any of claims 1 to 4, **wherein** each work tool (3a, 3b, 3c, 3d, 5a, 5b, 5c, 5d) intermittently transmits reports of the positions and motions of detected obstacles (4), including permanent obstacles, temporary obstacles(4), and other work tools (3a, 3b, 3c, 3d, 5a, 5b, 5c, 5d) in the work area (1) to the control node.

6. The method according to any of claims 1 to 5, **wherein** the work tools (3a, 3b, 3c, 3d, 5a, 5b, 5c, 5d) are instructed to avoid areas (7) designated as greens on a golf course.

7. A lawn maintenance system for operating in a work area (1) in accordance with any of the method claims 1 to 6, the system comprising at least two robotic work tools (3a, 3b, 3c, 3d, 5a, 5b, 5c, 5d), and a control node, the robotic work tools (3a, 3b, 3c, 3d, 5a, 5b, 5c, 5d) each comprising communication units configured to transmit and receive information about the respective positions and motions of the robotic work tools (3a, 3b, 3c, 3d, 5a, 5b, 5c, 5d) to the control node, which is configured to receive the information of the positions and motions and of characteristics of the work area (1), and configured to calculate the driving paths and driving speeds of the robotic work tools (3a, 3b, 3c, 3d, 5a, 5b, 5c, 5d) and transmit instructions to each of the robotic work tools **wherein** the robotic work tools (3a, 3b, 3c, 3d, 5a, 5b, 5c, 5d) are interconnectable by a line device (8a, 8b, 8c, 8d) and the control node is configured to base its calculations of the driving paths and driving speeds also on the area between the work tools (3a, 3b, 3c, 3d, 5a, 5b, 5c, 5d).

8. The maintenance system according to claim 7, **wherein** the control node is set up at least partly in at least one of the robotic work tools (3a, 3b, 3c, 3d, 5a, 5b, 5c, 5d).

9. The maintenance system according to claim 7 or claim 8, **wherein** the control node is at least partly set up in an external unit.

10. The maintenance system according to any of claims 7 to 9, **wherein** the line device (8a, 8b, 8c, 8d) is flexible, such as a rope, tube, cable, etc., and is attached between at least two of the work tools (3a, 3b, 3c, 3d, 5a, 5b, 5c, 5d).

11. The maintenance system according to claim 10, **wherein** the flexible line device (8a, 8b, 8c, 8d) is configured to be arranged with a length longer, by a predetermined amount, than the current distance between the work tools(3a, 3b, 3c, 3d, 5a, 5b, 5c, 5d), such that a slack is obtainable, for dragging behind the work tools (3a, 3b, 3c, 3d, 5a, 5b, 5c, 5d) when they are moving.

12. The maintenance system according to claim 11, **wherein** at least one of the robotic work tools (3a, 3b, 3c, 3d, 5a, 5b, 5c, 5d) is provided with a reel for attachment of one end of the line device, and the reel is configured to control the slack of the flexible line device (8a, 8b, 8c, 8d) between the robotic work tools (3a, 3b, 3c, 3d, 5a, 5b, 5c, 5d).

13. The maintenance system according to claim 11 or claim 12, **wherein** the length of the flexible line device (8a, 8b, 8c, 8d) is determined as a function of a pulling force in the line device (8a, 8b, 8c, 8d).

14. A robotic work tool (3a, 3b, 3c, 3d, 5a, 5b, 5c, 5d) for use in a lawn maintenance system according to any of claims 7 to 13, the work tool (3a, 3b, 3c, 3d, 5a, 5b, 5c, 5d) comprising a navigation unit, and a communication unit for transmission of position and motion information to a control node, **wherein** at least one line device (8a, 8b, 8c, 8d) attachment (11) is provided on the work tool (3a, 3b, 3c, 3d, 5a, 5b, 5c, 5d).

15. The robotic work tool (3a, 3b, 3c, 3d, 5a, 5b, 5c, 5d) according to claim 14, **wherein** the robotic work tool (3a, 3b, 3c, 3d, 5a, 5b, 5c, 5d) comprises at least a part of the control node.

16. The robotic work tool according to claim 14 or claim 15, **wherein** the line device attachment (11) comprises a reel configured to control the feeding and the retraction of the line device (8a, 8b, 8c, 8d).

17. The robotic work tool (3a, 3b, 3c, 3d, 5a, 5b, 5c, 5d) according to any of claims 14 to 16, **wherein** the navigation unit is configured to detect obstacles (4) in the work area (1) and to transmit information thereof to the control node.

18. The robotic work tool (3a, 3b, 3c, 3d, 5a, 5b, 5c, 5d) according to any of claims 14 to 17, **wherein** the robotic work tool (3a, 3b, 3c, 3d, 5a, 5b, 5c, 5d) comprises a drive system which is configured to steer away from the line device (8a, 8b, 8c, 8d) to compensate for any pulling force from the line device (8a, 8b, 8c, 8d).
